# EUROPEAN PATENT SPECIFICATION

(11) **EP 0 629 317 B1**
(45) Date of publication and mention of the grant of the patent: **27.11.1996**
(21) Application number: 93906415.0
(22) Date of filing: 03.03.1993
(51) Int. Cl.: H02K 19/18, H02K 19/20

(54) **ASYMMETRICAL ELECTRO-MECHANICAL DEVICE a.k.a. CDCII**
ASYMMETRISCHE ELEKTROMECHANISCHE VORRICHTUNG "A.K.A. CDCIL"
DISPOSITIF ELECTROMECANIQUE ASYMETRIQUE EGALEMENT APPELE CDC II

(30) Priority: 06.03.1992 CA 2062383
(43) Date of publication of application: 21.12.1994
(73) Proprietor: ELECTRO ERG LIMITED, H-2040 Budaors (HU)
(72) Inventor: SZABO, Leslie I., Omega Techno Ltd., H-2040 Budaors (HU)
(74) Representative: Drever, Ronald Fergus
(86) International application number: CA9300088
(87) International publication number: WO9318570

(56) References cited:
- DE-A- 1 935 657
- FR-A- 2 279 247
- FR-A- 2 603 433
- FR-A- 2 616 980
- FR-A- 2 632 133
- US-A- 3 864 588
- US-A- 5 130 593

## Description

### BACKGROUND OF THE INVENTION

This invention relates to an asymmetrical, electro-mechanical device which may act as a motor or a generator. In particular, the invention relates to an improved and efficient generator/motor.

Of course, electro-mechanical devices which act as motors and generators are known. However, it is always important to improve upon the prior electro-mechanical devices and, in particular, to improve the efficiency of those devices.

It is known from FR-A-2603433 to have a generator/motor with two rotors magnetically connected to each other, and two discontinuous stators magnetically connected to each other. The two rotors and two stators define a continuous magnetic flux path from a first discontinuous stator, through the first rotor to the second rotor to the second discontinuous stator. At all times, a part of the first rotor is adjacent a part of the first stator and a part of the second rotor is adjacent a part of the second stator completing the magnetic circuit.

It is also known from FR-A-2616980 to have generator/motor with a rotor having three pole faces.

### SUMMARY OF THE INVENTION

Accordingly, it is an object of this invention to at least partially improve upon the prior art devices, particularly by improving the efficiency of the prior art devices. Also, it is an object of this invention to provide an alternative type of electro-mechanical device, namely an asymmetrical electro-mechanical device.

Accordingly, in one of its broad aspects, this invention resides in providing an asymmetrical, electro-mechanical device comprising:
(a) a geometrically-magnetically-asymmetrical stator means comprising:
   a non-continuous stator magnetic flux path extending from a first stator portion to a second stator portion;
   stator air gap extending from the second stator portion to the first stator portion; and
   a stator face having a plurality of armature conductors extending substantially transversely across the stator face;
(b) a rotor means having a rotor face and moving along a rotor movement path;
(c) a rotor/stator air gap between the rotor face and the stator face when the rotor face and the stator face are adjacent each other;
(d) a continuous magnetic flux path extending along at least a portion of the stator magnetic flux path, through the stator face, through the rotor/stator air gap, into or out of the rotor face, through the rotor means, and through at least one magnetic flux connecting means which enables the magnetic flux path to be continuous;
(e) magnetic flux generating means for generating magnetic flux to pass through the continuous magnetic flux path;
(f) wherein the rotor means is capable of cyclically moving relative to the stator means in a direction along a rotor movement path which is outside of the stator magnetic flux path ;
(g) wherein when the rotor face and the stator face move relative to and adjacent to each other an armature electric voltage and armature current having directions are developed in the plurality of armature conductors; and wherein:
   (i) a first part of the rotor movement path is adjacent to the stator magnetic flux path, and a second part of the rotor movement path is not adjacent to the stator magnetic flux path such that magnetic flux, except magnetic flux leakage, cannot pass through the rotor face to or from the stator magnetic flux path;
   (ii) beginning at time zero until time critical, the rotor face moves away from both a first portion of the stator face and the stator magnetic flux path such that magnetic flux, except magnetic flux leakage, does not pass through the rotor face into or out of the stator magnetic flux path, then toward a second portion of the stator face, and then such that the rotor face is adjacent to and overlapping with the stator face such that operational magnetic flux passes through the rotor face into or out of the stator magnetic flux path;
   (iii) at time critical, the rotor face moves into a position of maximal overlap with the stator face; and
   (iv) from time critical until time end of cycle, the rotor face moves along at least a portion of the stator face and adjacent to the stator face in a direction of the stator magnetic path; and
(h) wherein when the plurality of armature conductors is closed or under load, the direction of the armature current reverses at time critical when the rotor face moves into a position of maximal overlap with the stator face, without the magnetic flux reversing direction and without the rotor means reversing direction.

Further aspects of the invention will become apparent upon reading the following detailed description and the drawings which illustrate the invention and preferred embodiments of the invention.

### BRIEF DESCRIPTION OF THE DRAWINGS

In the drawings, which illustrate embodiments of the invention:
Figure 1 is a schematic view of one embodiment of the invention;
Figure 2 is a schematic, perspective view of another embodiment of the invention;
Figure 3 is a schematic, top view of another embodiment of the invention;
Figure 4 is a schematic, perspective view of a further embodiment of the invention;
Figure 5 is a schematic, perspective view of yet a further embodiment of the invention; and
Figure 6 is a schematic, perspective view of yet a further embodiment of the invention.

### DETAILED DESCRIPTION OF PREFERRED EMBODIMENTS OF THE INVENTION

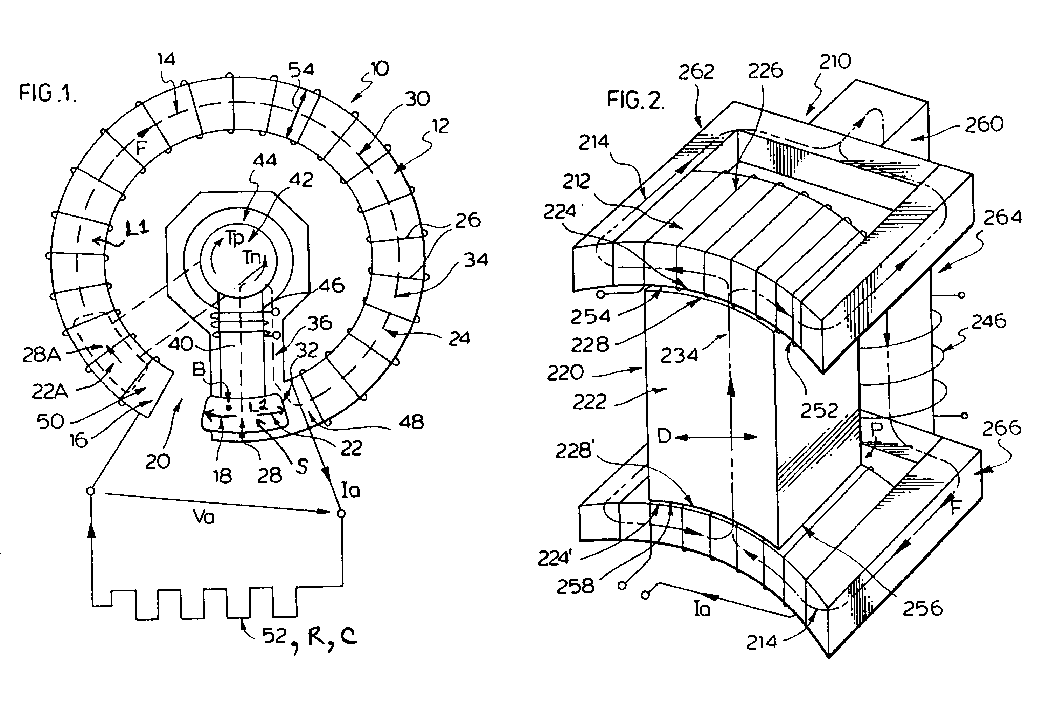

As shown in Figure 1, an asymmetrical, electro-mechanical device 10 of the invention includes a geometrically-magnetically-asymmetrical stator 12. Although the word "stator" is used to describe this feature and other similar features in this disclosure and the claims, the "stator" need not be "stationary".

The stator 12 has a non-continuous stator magnetic flux path 14 extending from a first stator portion 16 to a second stator portion 18.

There is also a stator air gap 20 which extends from the second stator portion 18 to the first stator portion 16. The stator air gap 20 may be an absolute air gap in the sense that the stator 12 is physically and completely discontinuous at the stator air gap 20. However, the stator air gap 20 may also be an effective air gap in the sense that the stator, for example only, as shown in Figure 1, could go into the plane of the paper beginning at the second stator portion 18 and extend sufficiently far from the remainder of the stator 12 and then return to the first stator portion 16. In this manner, there would be an effective air gap between the second stator portion 18 and the first stator portion 16 when a rotor 22 passed along the stator from the second stator portion 18 to the first stator portion 16. A stator air gap will be created, whether actual or effective, when magnetic flux, except leakage flux, will not pass from the rotor 22, specifically the rotor face 28, to the stator 12.

On at least some portion of the stator 12 there is a stator face 24. The stator face 24 has a plurality of armature conductors 26 extending substantially transversely across the stator face 24. The armature conductors 26 are substantially transverse to the direction of the stator magnetic flux path 14.

In Figure 1, the armature conductors 26 are coiled around a toroidally-shaped stator 12.

The rotor 22 has a rotor face 28. The rotor face 28 faces the stator face 24.

The rotor 22 moves along a rotor movement path 30. Preferably the rotor movement path 30 follows as closely as possible the stator magnetic flux path 14.

A rotor/stator air gap 32 exists between the rotor face 28 and the stator face 24 when the rotor face 28 and the stator face 24 are adjacent to each other.

The device 10 also has a continuous magnetic flux path 34 extending along at least a portion of the stator magnetic flux path 14. In the embodiment shown in Figure 1, the continuous magnetic flux path 34 extends along the entire portion of the stator flux path 14 from the first stator portion 16 to the second stator portion 18. The length of the continuous magnetic flux path 34 is variable in time as the rotor 22 moves along the rotor movement path 30. This will be explained below.

The continuous magnetic flux path 34 passes through the rotor/stator air gap 32, through the stator face 24 and through at least one magnetic flux connecting means 36 which enables the continuous magnetic flux path 34 to be continuous.

In Figure 1, in the position where the rotor 22 is shown in solid lines, the continuous magnetic flux path 34 is very short. The continuous magnetic flux path 34 extends from the rotor face 28 through an arm 40 which connects the rotor face 28 to an input/output shaft 42. In this embodiment, the input/output shaft 42 is magnetically connected to the connecting means 36 by any appropriate means such as a friction fit (not shown), brushes (not shown), or an air gap 44.

In any case, the continuous magnetic flux path 34 passes from the rotor 22 (specifically from the rotor arm 40 in this embodiment) to the connecting means 36. The continuous magnetic flux path 34 then continues through the connecting means 36 to that portion of the stator face 24 which is immediately adjacent to the rotor face 28. The continuous magnetic flux path 34 which has just been described in association with the rotor 22 when it is in the position shown by solid lines in Figure 1 is essentially the shortest continuous magnetic flux path 34 which can be obtained in the embodiment shown in Figure 1.

The longest continuous magnetic flux path 34 which can be obtained in the embodiment of Figure 1 is shown when the rotor 22 is in the region of the first stator position 16 which is shown generally by the rotor 22A shown in dashed lines in Figure 1. In that embodiment, the portion of the continuous magnetic flux path 34 which extends through the stator flux path 14 extends from the position of the rotor face 28A (as shown with dashed lines in Figure 1) clockwise all the way around the stator flux path 14 to the second stator portion 18.

As the rotor 22 moves clockwise around the circular rotor movement path 30, the length of the actual continuous magnetic flux path 34 decreases.

There is also a magnetic flux generating means 46 for generating magnetic flux F. This magnetic flux passes through the continuous magnetic flux path 34. In Figure 1, the magnetic flux generating means 46 is a coil 46 around the rotor arm 40. However, any other suitable magnetic flux generating means could be used anywhere in the magnetic flux path 34.

The rotor 22 is capable of cyclicly moving relative to the stator 12. Once again, as discussed with respect to the stator, although the word "rotor" is used to describe this feature 22, the rotor need not rotate and it need not even move. The important point is that there is relative movement between the rotor 22 and the stator 12.

In the embodiment of Figure 1, the rotor 22 moves in a direction (as shown by the arrow on the dashed representation of the rotor 22A in Figure 1) along the rotor movement path 30. The rotor movement path 30 is outside of the stator magnetic flux path 14. In essence, the rotor movement path 30 does not cross through and is not positioned within the stator magnetic flux path 14.

A first part of the rotor movement path 30 is adjacent to the stator magnetic path 14, preferably adjacent the stator face 24. In that way, a rotor/stator air gap 32 can be created and the continuous magnetic flux path 34 can be created. In Figure 1, this first part of the rotor movement path corresponds to the movement of the rotor from a position adjacent to the first stator position 16 to a position adjacent to the second stator portion 18.

There is also a second part of the rotor movement path 30 which is not adjacent to the stator magnetic path 14 such that the magnetic flux F, except for magnetic flux leakage, does not pass through the rotor face 28 to or from the stator magnetic flux path 14. In other words, during the second part of the rotor movement path 30, the rotor face is in such a position such that there is no continuous magnetic flux path 34 or otherwise in that particular position. This is accomplished by having the second part of the rotor movement path 30 pass by or through the stator air gap 20.

The second part of the rotor movement path 34, in the embodiment shown in Figure 1, is part of the rotor movement path 30 from the second stator flux portion 18 to the first stator portion 16. In other words, the second part of the rotor movement path 30 is when the rotor face 28 passes through or over the stator air gap 20.

Beginning at a time zero until a time critical, the rotor face 28 moves away from both a first portion 48 of the stator face 24 and the stator magnetic path 14. In the embodiment shown in Figure 1, the first part 48 of the stator face 24 corresponds to the second stator portion 18. This is because the stator face 24 in Figure 1 includes substantially all of the stator 14. However, it would be possible to have the armature conductors 26 extend only around a portion of the toroidally-shaped stator 14. In that situation, the first part 48 of the stator face 24 (which is really an end of the stator face 24) would not correspond to the first and second stator portions 16, 18.

During at least part of this time zero to time critical, magnetic flux F, except magnetic flux leakage, does not pass through the rotor face 28 into or out of the stator magnetic flux path 14. Therefore, during at least part of this time zero to time critical, there is no flux F, except leakage flux, passing through the continuous magnetic flux path 34.

During this time zero to time critical, after the rotor face 28 moves away from the first portion 48 of the stator face 24, the rotor face 28 moves towards a second portion 50 of the stator face 24. Once again, in the embodiment shown in Figure 1, the second portion 50 of the stator face 24 corresponds to the first stator portion 16. This is because the armature conductors 26, as shown in Figure 1, are coiled substantially right to the end of the stator 14 where the stator air gap 20 begins. However, if the armature conductors 26 were not coiled right up to the end of the stator 14 at the stator air gap 20, the stator face 24 would have ended at a place different than the first stator means 16.

During this time zero to time critical, the rotor face 28 moves to a position adjacent to the second portion 50 of the stator face 24, and eventually overlaps with the second portion 50 of the stator face 24, such that operational magnetic flux F passes through the rotor face 28 into or out of the stator magnetic flux path 14. Thus, the continuous magnetic flux path 34 is brought into existence.

At time critical, the rotor face 28 moves into a position of maximum overlap with the stator face 24. In Figure 1, time critical occurs when the rotor 22A is in the position shown by dashed lines.

From time critical until time end of cycle, the rotor face 28 moves along at least a portion of the stator face 24 and adjacent to the stator face 24 in a direction of the stator magnetic flux path 14.

When the rotor face 28 and stator face 24 move relative to and adjacent to each other, an armature electric voltage Va and an armature current Ia having directions are developed in the plurality of armature conductors 26. In the embodiment shown in Figure 1, only the rotor 22 moves and the stator 14 remains stationary.

When the plurality of armature conductors 26 is closed or under load 52, the direction of the armature current Ia reverses at time critical when the rotor face 28 moves into a position of maximal overlap with the stator face 24, without the magnetic flux F reversing direction and without the rotor 28 reversing direction.

In the embodiment of the invention as shown in Figure 1, the stator is a toroidally-shaped body. A first end of the toroidally-shaped body corresponds to the first stator portion 16 and a second end of the toroidally-shaped body corresponds to the second stator portion 18. The stator extends toroidally for less than 360° from the first end to the second end. The gap between the first and second ends of the toroidally-shaped body is the stator air gap 20.

As noted previously, in the embodiment shown in Figure 1, the conductors of the plurality of armature conductors 26 are coiled around the toroidally-shaped body. As shown, there is one continuous coil. However, it would be possible to have other arrangements of the armature conductor coils 26.

In the embodiment of Figure 1, the rotor 22 is connected by the rotor arm 40, which acts as a magnetic path connecting means, to complete the continuous magnetic flux path 34. The rotor 22 is connected to the input/output shaft 42 which is located concentrically within the toroidally-shaped stator 12.

In the embodiment shown in Figure 1, during the time from time zero to time critical, the rotor face 28 passes by the stator air gap 20 such that magnetic flux F, other than leakage flux, cannot pass through the rotor face 28 into or out of the stator magnetic flux path 14.

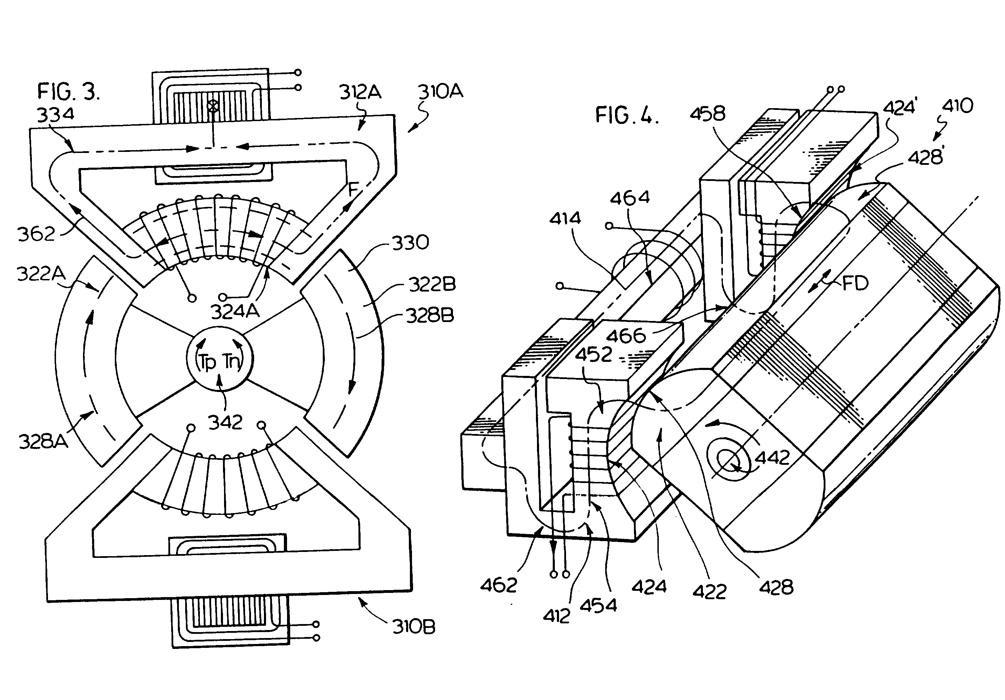

Another embodiment of the invention is shown in Figure 2. Respecting the embodiment of Figure 2, as well as in the embodiments of Figure 3, 4, 5 and 6, the numeric references will have three digits. The first digit will correspond to the particular Figure number and the last two digits will correspond to the numeric reference of the corresponding like feature in the embodiment described with reference to Figure 1.

In the embodiment of Figure 2, as well as in the embodiments of Figure 3, 4, 5 and 6, when the rotor face 228 and stator face 224 are adjacent to each other and overlap with each other, the rotor 222 is positioned between the stator face 224 and a second stator face 224'. The second stator face 224' is spaced apart from the first stator face 224 such that a second rotor face 228' on the rotor means 222 is adjacent to and overlaps the second stator face 224'.

As with the embodiments described in Figure 1, the stator face 224 has a first end 252 and a second end 254. Also, the second stator face 224' has a first end 256 and a second end 258.

In this second embodiment, the non-continuous stator magnetic flux path 214 extends from the first end 252 of the first stator face 224 to the second end 254 of the first stator face 224. The non-continuous stator magnetic flux path 214 passes through a stator path member 260 extending from at least the second end 254 of the stator face 224 to the first end 256 of the second stator face 224'. The non-continuous stator magnetic flux path 214 then passes from the first end 256 of the second stator face 224' to the second end 258 of the second stator face 224'. It will be understood that the stator path member 260 and the the non-continuous stator magnetic flux path 214 are arranged in a manner so as to not impede the relative movement between the rotor 222 and the stator 212.

In the embodiment shown in Figure 2, the rotor 222 may move in the direction shown as "D" in Figure 2. Similarly, the entire stator 212 may move and the rotor 222 may remain stationary.

While the rotor 222 is positioned between the first stator face 224 and the second stator face 224', the continuous magnetic flux path 234 passes through the rotor 222.

The stator air gap in Figure 2 is shown as 220. The armature conductors are shown as 226 in Figure 2 and the magnetic flux generating means is shown as 246.

Although the second stator face 224' is shown as being substantially in a plane parallel to the first stator face 224 in Figure 2, it is possible that the second stator face 224' could be perpendicular to the first stator face 224 and come face to face with the rotor 222 in a region generally shown as P in Figure 2.

In a preferred embodiment of the invention, the Lorentz force equal to B.l.i does not create any more than a negligible negative torque on the input/output shaft connected to either of the moving rotor 12 or to the moving stator 12, if the stator moves. A negative torque is one which opposes the desired movement of the rotor 22 and is shown as Tn in the Figures.

In regard to this invention, "B" of the Lorentz force is a magnetic flux through the rotor/stator air gap 32. Also, "1" is the length of that portion of the armature conductor 26 passing across the stator face 24 and through the rotor/stator air gap 32. The length "1" is shown as reference 54 in Figure 1.

Also, "i" is the armature current Ia.

In a further preferred embodiment of the invention, the device 10 is operable such that between time zero and time critical, the armature current Ia creates a magnetic flux F in the stator magnetic flux path 14 which contributes to a positive torque Tp on the input/output shaft 42.

In a further preferred embodiment of the invention, the positive torque Tp described above, between time zero and time critical, is created when the following features of the device 10 are properly adjusted:
resistance R of the load 52 connected to the armature conductors 26;
capacitance C of the load 52;
length L1 from the first portion 48 of the stator face 24 to the second portion 50 of the stator face 24 during which the magnetic flux F, except magnetic flux leakage, does not pass through the rotor face 28 into or out of the stator magnetic flux path 14;
shape S of the rotor face 28; and
length L2 of the rotor face 28.

In a further specific embodiment of the invention, as shown in Figure 2, the first and second rotor faces 228, 228' are in separate planes which are substantially parallel to each other. Also, the non-continuous stator magnetic flux path 214 comprises a first path member 262 extending from the second end 254 of the first stator face 224 in a plane substantially parallel to the plane of the first rotor face 222 to a second path member 264. The second path member 264 is part of the stator path member 260. The second path member 264 extends in a plane substantially perpendicular to the planes of the rotor faces 224 and 224'. The non-continuous stator magnetic flux path 214 further comprises the second path member 264 and a third path member 266 which extends from the second path member 264 in a plane substantially parallel to the plane of the second rotor face 228' to the first end 256 of the second stator face 224'.

In a further preferred embodiment of the invention, as shown in Figure 3, each of the first and second rotor faces is configured in an arc in its respective plane. In Figure 3, which is a top view, there are actually two first rotor faces 328A and 328B shown. However, in one embodiment, there need only be one first rotor face 328A or 328B. It is preferred that there be at least two rotor faces 328A and 328B, in order that an embodiment as described below will be balanced. However, for the time being, consider, as this embodiment of the invention only, the rotor 322A and stator 312A.

In this embodiment, the rotor 322A rotates around the input/output shaft 342 in a circular path 330. Also, each of the first and second stator faces 328A and 328A' (not shown) is configured in an arc along at least a part of the circular path of the rotor 322A.

Essentially, the rotor 322A and the stator 312A in Figure 3 is a top view of a specific embodiment of the more-general embodiment shown in Figure 2.

In a further embodiment of the invention, two of the devices 310A and 310B are combined. The two devices 310A and 310B are similar electro-magnetic devices. The two devices 310A and 310B are configured such that the rotors 322A and 322B are magnetically insulated from the rotor 322B, 322A of the other device. The rotor 322A, 322B of each of the devices 310A, 310B is connected to a common input/output shaft 342 in a balanced configuration and rotates around the shaft 342 in a common circular path 330 such that the rotor 322A, 322B of each device 310A, 310B passes between the stator faces 324A, 324A' and 324B, 324B' of each of the other devices.

In another preferred embodiment of the invention, as shown in Figure 4, the device 410 has first and second rotor faces 428 and 428' which are spaced apart in a first direction FD. The first and second rotor faces 428, 428' have curved surfaces which are substantially parallel to each other. The non-continuous stator magnetic flux path 414 comprises a first path member 462 extending from the second end 454 of the first stator face 424 in a plane substantially perpendicular to the surface of the first rotor face 428 to a second path member 464 extending in a direction substantially parallel to the first direction FD in which the rotor faces 428, 428' are spaced apart.

The non-continuous stator magnetic flux path 414 also comprises the second path member 464 and a third path member 466 which extends from the second path member 464 in a plane substantially perpendicular to the plane of the second rotor face 424' to the first end of the second stator face 458.

In this embodiment, the rotor 422 rotates along the rotor movement path which is a circular path around the input/output shaft 442. Thus, the continuous magnetic flux path is in existence when the rotor 422 rotates such that the rotor faces 428, 428' are adjacent to the stator faces 424, 424'.

In a further preferred embodiment of the invention, the rotor 422 moves relative to the stator 412 around the input/output shaft 442 in a circular path. Also, each of the first and second rotor faces 428, 428' is positioned at substantially the same distance from the input/output shaft 442. Also, the length of each rotor face in the direction of the circular path is less than 360°.

In a further preferred embodiment of the invention, the rotor 422 is connected to and rotates with the input/output shaft 442 as shown in Figure 4. Also, the rotor 422 is positioned closer to the input/output shaft 442 than is the stator 412.

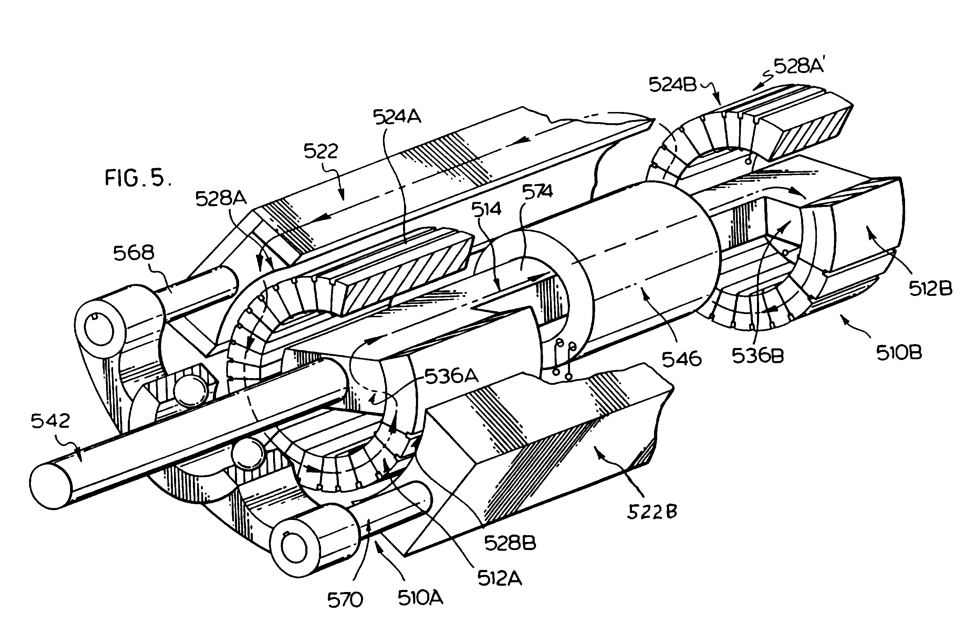

In a further preferred embodiment of the invention, as shown in Figure 5, there are at least two similar electro-magnetic devices 510A and 510B. However, for purposes of illustration, all of the stator 512B of device 510B is not shown. In this embodiment, the rotor 522 is positioned further from the input/output shaft 542 than is each of the stators 512A and 512B.

In this embodiment, each of the stators 512A, 512B is connected to the input/output shaft 542. However, the rotor 522 could be configured so as to rotate around the shaft 542 and be connected to another shaft (not shown) which acts as an input/output shaft. For example, the shaft 542 could terminate as shown in Figure 5 and the shafts 568 and 570 could extend further and then be connected to radial spokes (not shown) which could be connected to a central longitudinal shaft (not shown) which acts as an input/output shaft.

In any case, it is preferred that the rotor 522 is positioned in a balanced configuration. Thus, a second rotor 522B could be positioned directly opposite the rotor 522. Alternately, a simple counterweight could be used to balance the rotor 522 in place of the second rotor 522B.

In any case, it is preferred that the rotor 522 moves in a circular path such that the first and second rotor faces 528A and 528A' of device 510A and rotor faces 528B and 528B' of device 510B pass by the corresponding stator faces 524A and 524B of each of the other devices 510A, 510B.

Thus, in this particular embodiment, the flux connecting means 536A is connected by an additional flux connecting means 574 to the flux connecting means 536B of the device 510B. Thus, in this embodiment, there is a shared or common stator magnetic flux path 514.

In the embodiment shown in Figure 5, the two stators 512A and 512B are connected to the same input/output shaft 542.

In yet a further embodiment of the invention, each of the stator faces 524A and 524B has a length in the direction of the circular path of rotation of the stator faces 524A, 524B which is less than 360°. Preferably, the length is also greater than about 240°.

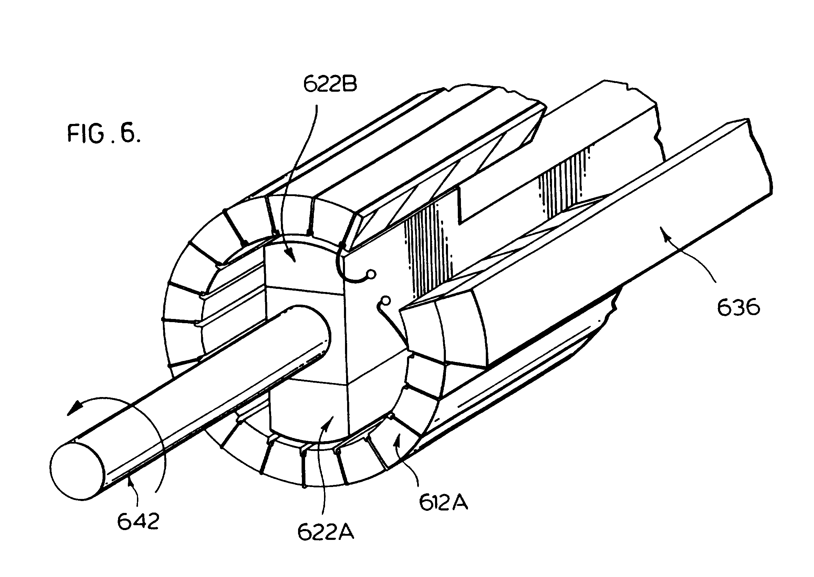

In a further preferred embodiment of the invention, as shown in Figure 6, the rotor means is connected to and rotates with the input/output shaft 642. Also, the rotor 622A is positioned closer to the input/output shaft 642 than is the stator 612A.

Moreover, the embodiment shown in Figure 6 includes a stationary flux connecting means 636 which includes a flux path which is common to both the stator flux path (not shown) of stator 612A and a second stator flux path (not shown) of a second stator (not shown).

It will be understood that, although various features of the invention have been described with respect to one or another of the embodiments of the invention, the various features and embodiments of the invention may be combined or used in conjunction with other features and embodiments of the invention as described and illustrated herein.

## Claims

1. An asymmetrical, electro-mechanical device (10) comprising:
(a) a geometrically-magnetically-asymmetrical stator means (12) comprising:
a non-continuous stator magnetic flux path (14) extending from a first stator portion (16) to a second stator portion (18);
stator air gap (20) extending from the second stator portion (18) to the first stator portion (16); and
a stator face (24) having a plurality of armature conductors (26) extending substantially transversely across the stator face;
(b) a rotor means (22) having a rotor face (28) and moving along a rotor movement path (30);
- (c) a rotor/stator air gap (32) between the rotor face (28) and the stator face (24) when the rotor face (28) and the stator face (24) are adjacent each other;
(d) a continuous magnetic flux path (34) extending along at least a portion of the stator magnetic flux path (14), through the stator face (24), through the rotor/stator air gap (32), into or out of the rotor face (28), through the rotor means (22), and through at least one magnetic flux connecting means (36) which enables the magnetic flux path (34) to be continuous;
(e) magnetic flux generating means (46) for generating magnetic flux (F) to pass through the continuous magnetic flux path (34);
(f) wherein the rotor means (22) is capable of cyclically moving relative to the stator means (12) in a direction along the rotor movement path (30) which is outside of the stator magnetic flux path (14) ;
(g) wherein when the rotor face (28) and the stator face (24) move relative to and adjacent to each other an armature electric voltage (Va) and an armature current (Ia) having directions are developed in the plurality of armature conductors (26); wherein :
(i) a first part of the rotor movement path (30) is adjacent to the stator magnetic flux path (14), and CHARACTERISED IN THAT a second part of the rotor movement path (30) is not adjacent to the stator magnetic flux path such that magnetic flux (F), except magnetic flux leakage, cannot pass through the rotor face (28) to or from the stator magnetic flux path (14);
(ii) beginning at time zero until time critical, the rotor face (28) moves away from both a first portion (48) of the stator face (24) and the stator magnetic flux path (14) such that magnetic flux (F), except magnetic flux leakage, does not pass through the rotor face (28) into or out of the stator magnetic flux path (14), then toward a second portion (18) of the stator face (24), and then such that the rotor face (28) is adjacent to and overlapping with the stator face (24) such that operational magnetic flux (F) passes through the rotor face (28) into or out of the stator magnetic flux path (14);
(iii) at time critical, the rotor face (28) moves into a position of maximal overlap with the stator face (24); and
(iv) from time critical until time end of cycle, the rotor face (28) moves along at least a portion of the stator face (24) and adjacent to the stator face (24) in a direction of the stator magnetic path (14); and
(h) wherein when the plurality of armature conductors is closed or under load, the direction of the armature current (Ia) reverses at time critical when the rotor face (28) moves into a position of maximal overlap with the stator face (24), without the magnetic flux (F) reversing direction and without the rotor means (22) reversing direction.

2. An electro-magnetic device as defined in claim 1 characterized in that:
the stator means (12) is a toroidally-shaped body having a first end and a second end, and extending toroidally for less than 360° from the first end to the second end;
the first and second ends of the toroidally-shaped body are the first and second stator portions (16, 18), respectively, and the stator air gap (20) is a gap between the second end and first end of the toroidally-shaped body;
the conductors of the plurality of armature conductors (26) are coiled around the toroidally-shaped body;
the rotor means (22) is connected by a first magnetic path connecting means (40) to a shaft (42) located concentrically within the toroidally-shaped stator means; and
during a time from time zero to time critical the rotor face (28) passes by the stator air gap (20) such that magnetic flux (F), except magnetic flux leakage, cannot pass through the rotor face (28) into or out of the stator magnetic flux path (14).

3. An electro-magnetic device as defined in claim 1 characterized in that:
when the rotor face (28) and stator face (24) are adjacent to each other and overlapped with each other, the rotor means (222) is positioned between the stator face (224) and a second stator face (224') which is spaced apart from the stator face (224) such that a second rotor face (228') on the rotor means (222) is adjacent to and overlaps the second stator face (224');
the stator face (224) has a first end (252) and a second end (254);
the second stator face (224') has a first end (256) and a second end (258); and
the non-continuous stator magnetic flux path (214) extends from the first end (252) of the stator face (224), to the second end (254) of the stator face (224), through a stator path member (260) extending from the second end (254) of the stator face (224) to the first end (256) of the second stator face (224'), and then from the first end (256) of the second stator face (224') to the second end (258) of the second stator face (224') in a manner so as to not impede the relative movement between the rotor means (222) and the stator means (212).

4. An electro-magnetic device as defined in claim 2 characterised in that a Lorentz force equal to B.l.i does not create any more than a negligible negative torque on an input/output shaft (42) connected to either the moving rotor means (22) or the moving stator means (12),
where:
"B" is magnetic flux through the rotor/stator air gap;
"l" is a length of that portion of the armature conductor passing across the stator face and through the rotor/stator air gap; and
"i" is the armature electric current.

5. An electro-magnetic device as defined in claim 4 characterized in that the device is operable such that between time zero and time critical the armature electric current (Ia) creates a magnetic flux in the stator magnetic flux path (14), contributing to a positive torque (Tp) on the input/output shaft (42).

6. An electro-magnetic device as defined in claim 5 characterized in that the positive torque (Tp) is created when the following features of the device (10) are properly adjusted:
resistance (R) of a load (52) connected to the armature conductors (26);
capacitance (C) of the load (52);
length (L1) from the first portion (48) of the stator face (24) to the second portion (50) of the stator face (24) during which the magnetic flux (F), except magnetic flux leakage, does not pass through the rotor face (28) into or out of the stator magnetic flux path (14);
shape (S) of the rotor face (28); and
length (L2) of the rotor face (28).

7. An electro-magnetic device as defined in claim 3 characterized in that a Lorentz force equal to B.l.i does not create any more than a negligible negative torque (Tn) on an input/output shaft (42) connected to either the moving rotor means (22) or the moving stator means (12),
where:
"B" is magnetic flux through the rotor/stator air gap (32);
"1" is a length of that portion of the armature conductor (26) passing across the stator face (24) and through the rotor/stator air gap (32); and
"i" is the armature electric current (Ia).

8. An electro-magnetic device as defined in claim 7 characterized in that the device is operable such that between time zero and time critical the armature electric current (Ia) creates a magnetic flux (F) in the stator magnetic flux path (14) contributing to a positive torque (Tp) on the input/output shaft (42).

9. An electro-magnetic device as defined in claim 8 characterized in that the positive torque (Tp) is created when the following features of the device (10) are properly adjusted:
resistance (R) of a load (52) connected to the armature conductors (26);
capacitance (C) of the load (52);
length (L1) from the first portion (48) of the stator face (24) to the second portion (50) of the stator face (24) during which the magnetic flux (F), except magnetic flux leakage, does not pass through the rotor face (28) into or out of the stator magnetic flux path (14);
shape(S) of the rotor face (28); and
length (L2) of the rotor face (28).

10. An electro-magnetic device (210) as defined in claim 9 characterized in that the first and second rotor faces (228, 228') are in separate planes which are substantially parallel to each other; and the non-continuous stator magnetic flux path (214) comprises a first path member (262) extending from the second end (254) of the stator face (224) in a plane substantially parallel to the plane of the first rotor face (222) to a second path member (264) extending in a plane substantially perpendicular to the planes of the rotor faces (228, 228'), the second path member (264), and a third path member (266) extending from the second path member (264) in a plane substantially parallel to the plane of the second rotor face (228') to the first end (256) of the second stator face (224').

11. An electro-magnetic device (310) as defined in claim 10 characterized in that each of the first and second rotor faces (328A, 328A') is configured in an arc in its respective plane; the rotor means (322A) rotates around the input/output shaft (342) in a circular path (330); and each of the first and second stator faces (324A, 324A') is configured in an arc along at least a part of the circular path (330) of the rotor means (322A).

12. An electro-magnetic device (310A) as defined in claim 11 characterized in that device (310A) comprises at least one other similar electro-magnetic device (310B) wherein the rotor means (322A, 322B) of each of the devices (310A, 310B) is magnetically insulated from the rotor means (322B, 322A) of each other device (310B, 310A); the rotor means (322A, 322B) of each of the devices (310A, 310B) is connected to a common input/output shaft (342) in a balanced configuration and rotates around the shaft (342) in a common circular path (330) such that the rotor means (322A, 322B) of each device (310A, 310B) passes between the stator faces (324, 324A', 324B, 324B') of each of the other devices (310B, 310A).

13. An electro-magnetic device (410) as defined in claim 9 characterized in that the first and second rotor faces (428, 428') have curved surfaces which lie in the same cylindrical plane and are spaced apart in a first direction (FD) parallel to the axial direction of the cylindrical plane; and the non-continuous stator magnetic flux path comprises a first path member (462) extending from the second end (454) of the stator face (424) in a plane substantially perpendicular to the surface of the first rotor face (428) to a second path member (464) extending in a direction substantially parallel to the first direction (FD) in which the rotor faces (428, 428') are spaced apart, the second path member (464), and a third path member (466) extending from the second path member (464) in a plane substantially perpendicular to the plane of the second rotor face (424') to the first end (456) of the second stator face (458).

14. An electro-magnetic device (410) as defined in claim 13 characterized in that the rotor means (422) moves relative to the stator means (412) around the input/output shaft (442) in a circular path (430); each of the first and second rotor faces (428, 428') is positioned at substantially the same distance from the input/output shaft (442); and the length of each rotor face in the direction of the circular path (430) is less than 360°.

15. An electro-magnetic device (410) as defined in claim 14 characterized in that the rotor means (422) is connected to and rotates with the input/output shaft (442) and is positioned closer to the input/output shaft (442) than is the stator means (412).

16. An electro-magnetic device (510A) as defined in claim 9 characterized in that the device (510A) comprises at least one other similar electro-magnetic device (510B) wherein the rotor means (522, 522B) of each of the devices (510A, 510B) is magnetically insulated from the rotor means (522B, 522) of each other device (510B, 510A); the stator means (512A, 512B) of each of the devices (510A, 510B) is connected to a common input/output shaft (542) in a balanced configuration and rotates around the shaft (542) in a common circular path such that the first and second rotor faces (520A, 520B) of the rotor means (522, 522B) of each device (510A, 510B) pass by the corresponding stator faces (524A, 524B) of the stator means (512A, 512B) of each of the other devices (510B, 510A).

17. An electro-magnetic device as defined in claim 14 characterized in that each of the stator faces (24) has a length in the direction of the circular path which is less than 360° and greater than about 240°.

18. An electro-magnetic device as defined in claim 17 characterized in that the rotor means (22) is connected to and rotates with the input/output shaft (42) and is positioned closer to the input/output shaft (42) than is the stator means (12).

19. An electro-magnetic device as defined in claim 14 characterized in that the stator means (12) is connected to and rotates with the input/output shaft (42) and is positioned closer to the input/output shaft (42) than is the rotor means (22).

20. An electro-magnetic device as defined in claim 17 characterized in that the stator means (12) is connected to and rotates with the input/output shaft (42) and is positioned closer to the input/output shaft (42) than is the rotor means (22).

## Patentansprüche

1. Asymmetrische elektromechanische Vorrichtung (10) mit:
(a) einer geometrisch-magnetisch asymmetrischen Statoreinrichtung (12) mit:
einem magnetischen Flußweg (14) mit nicht-kontinuierlichem Stator, der sich von einem ersten Statorabschnitt (16) zu einem zweiten Statorabschnitt (18) erstreckt;
einem Statorluftspalt (20), der sich von dem zweiten Statorabschnitt (18) zu dem ersten Statorabschnitt (16) erstreckt; und
einer Statorfläche (24) mit einer Vielzahl von Ankerleitern (26), die sich im wesentlichen in Querrichtung über die Statorflächen erstrecken;
(b) einer Rotoreinrichtung (22), die eine Rotorfläche (28) hat und sich entlang eines Rotorbewegungsweges (30) bewegt;
(c) einem Rotor/Stator-Luftspalt (32) zwischen der Rotorfläche (28) und der Statorfläche (24), wenn sich die Rotorfläche (28) und die Statorfläche (24) nebeneinander befinden;
(d) einem kontinuierlichen magnetischen Flußweg (34), der sich zumindest entlang eines Abschnitts des magnetischen Flußweges (14) im Stator, durch die Statorfläche (24), durch den Rotor/ Stator-Luftspalt (32) in die Rotorfläche (28) hinein oder aus ihr heraus, durch die Rotoreinrichtung (22) und durch mindestens eine Verbindungseinrichtung (36) für magnetischen Fluß, welche es ermöglicht, daß der magnetische Flußweg (34) kontinuierlich ist, erstreckt;
(e) einer Erzeugungseinrichtung (46) für magnetischen Fluß zum Erzeugen von magnetischem Fluß (F), der durch den kontinuierlichen magnetischen Flußweg (34) verlaufen soll;
(f) wobei die Rotoreinrichtung (22) in der Lage ist, sich relativ zu der Statoreinrichtung (12) in einer Richtung entlang des Rotorbewegungsweges (30) zyklisch zu bewegen, der sich außerhalb des magnetischen Flußweges (14) im Stator befindet;
(g) wobei, wenn sich die Rotorfläche (28) und die Statorfläche (24) relativ zueinander und nebeneinander bewegen, eine elektrische Ankerspannung (Va) und ein Ankerstrom (Ia), die gerichtet sind, in der Vielzahl von Ankerleitern (26) entwickelt werden; wobei:
(i) ein erster Teil des Rotorbewegungsweges (30) benachbart zu dem magnetischen Flußweg (14) im Stator ist und dadurch gekennzeichnet, daß ein zweiter Teil des Rotorbewegungsweges (30) nicht benachbart zu dem magnetischen Flußweg im Stator ist, so daß magnetischer Fluß (F) mit Ausnahme von magnetischem Streufluß nicht durch die Rotorfläche (28) zu oder von dem magnetischen Flußweg (14) im Stator hindurchtreten kann;
(ii) sich beginnend vom Zeitpunkt Null zum kritischen Zeitpunkt die Rotorfläche (28) sowohl von einem ersten Abschnitt (48) der Statorfläche (24) und dem magnetischen Flußweg (14) im Stator wegbewegt, so daß magnetischer Fluß (F) mit Ausnahme von magnetischem Streufluß nicht durch die Rotorfläche (28) hindurch in den oder aus dem magnetischen Flußpfad (14) im Stator hindurchtritt, woraufhin sie sich zu einem zweiten Abschnitt (18) der Statorfläche (24) und daraufhin auf eine solche Weise bewegt, daß die Rotorfläche (28) benachbart zu und mit der Statorfläche (24) überlappend ist, so daß ein magnetischer Fluß (F) im Betrieb durch die Rotorfläche (28) in oder aus dem magnetischen Flußpfad (14) im Stator hindurchtritt;
(iii) sich zum kritischen Zeitpunkt die Rotorfläche (28) in eine Position maximaler Überlappung mit der Statorfläche (24) bewegt; und
(iv) vom kritischen Zeitpunkt bis zum Ende des Zyklus sich die Rotorfläche (28) zumindest entlang eines Abschnitts der Statorfläche (24) und benachbart zu der Statorfläche (24) in einer Richtung des magnetischen Flußpfades (14) im Stator bewegt; und
(h) wobei, wenn die Vielzahl von Ankerleitern geschlossen oder belastet ist, sich die Richtung des Ankerstromes (Ia) zum kritischen Zeitpunkt umkehrt, wenn sich die Rotorfläche (28) in eine Position maximaler Überlappung mit der Statorfläche (24) bewegt, ohne daß der magnetische Fluß (F) die Richtung umkehrt und ohne daß die Rotoreinrichtung (22) die Richtung umkehrt.

2. Elektromagnetische Vorrichtung nach Anspruch 1, dadurch gekennzeichnet, daß:
die Statoreinrichtung (12) ein toroidförmiger Körper mit einem ersten Ende und einem zweiten Ende ist und sich toroidförmig über weniger als 360° von dem ersten Ende zu dem zweiten Ende erstreckt;
das erste und das zweite Ende des toroidförmigen Körpers jeweils der erste und der zweite Statorabschnitt (16, 18) sind und der Statorluftspalt (20) ein Spalt zwischen dem zweiten Ende und dem ersten Ende des toroidförmigen Körpers ist;
die Leiter der Vielzahl von Ankerleitern (26) um den toroidförmigen Körper gewickelt sind;
die Rotoreinrichtung (22) mittels einer ersten Verbindungseinrichtung für magnetischen Fluß (40) mit einer Welle (42) verbunden ist, die innerhalb der thoroidförmigen Statoreinrichtung konzentrisch angeordnet ist; und
während einer Zeit vom Zeitpunkt Null zum kritischen Zeitpunkt die Rotorfläche (28) an dem Statorluftspalt (20) so vorbei läuft, daß magnetischer Fluß (F) mit Ausnahme von magnetischem Streufluß nicht durch die Rotorfläche (28) in den oder aus dem magnetischen Flußweg (14) durch den Stator hindurchtreten kann.

3. Elektromagnetische Vorrichtung nach Anspruch 1, dadurch gekennzeichnet, daß:
wenn die Rotorfläche (28) und die Statorfläche (24) zueinander benachbart sind und überlappen, die Rotoreinrichtung (222) zwischen der Statorfläche (224) und einer zweiten Statorfläche (224') positioniert wird, die von der Statorfläche (224) beabstandet ist, so daß eine zweite Rotorfläche (228') an der Rotoreinrichtung (222) zu der zweiten Statorfläche (224') benachbart ist und mit ihr überlappt;
die Statorfläche (224) ein erstes Ende (252) und ein zweites Ende (254) hat;
die zweite Statorfläche (224') ein erstes Ende (256) und ein zweites Ende (258) hat; und
der nicht-kontinuierliche magnetische Flußweg (214) im Stator sich von dem ersten Ende (252) der Statorfläche (224) zu dem zweiten Ende (254) der Statorfläche (224) durch ein Statorwegelement (260) erstreckt, das sich von dem zweiten Ende (254) der Statorfläche (224) zu dem ersten Ende (256) der zweiten Statorfläche (224') erstreckt, und sich dann von dem ersten Ende (256) der zweiten Statorfläche (224') zu dem zweiten Ende (258) der zweiten Statorfläche (224') derart erstreckt, daß die Relativbewegung zwischen der Rotoreinrichtung (222) und der Statoreinrichtung (212) nicht behindert wird.

4. Elektromagnetische Vorrichtung nach Anspruch 2, dadurch gekennzeichnet, daß eine Lorentzkraft der Größe B.l.i. nicht mehr als ein vernachlässigbares negatives Drehmoment an einer Eingangs/Ausgangswelle (42) erzeugt, die entweder mit der sich bewegenden Rotoreinrichtung (22) oder der sich bewegenden Statoreinrichtung (12) verbunden ist,
wobei:
"B" der magnetische Fluß durch den Rotor/Stator-Luftspalt ist;
"l" eine Länge dieses Abschnitts des Ankerleiters ist, der sich über die Statorfläche bewegt und durch den Rotor/Stator-Luftspalt hindurchtritt; und
"i" der elektrische Ankerstrom ist.

5. Elektromagnetische Vorrichtung nach Anspruch 4, dadurch gekennzeichnet, daß die Vorrichtung so betrieben werden kann, daß zwischen dem Zeitpunkt Null und dem kritischen Zeitpunkt der elektrische Ankerstrom (Ia) in dem magnetischen Flußweg (14) im Stator einen magnetischen Fluß erzeugt, der zu einem positiven Drehmoment (Tp) an der Eingangs/Ausgangsstelle (42) beiträgt.

6. Elektromagnetische Vorrichtung nach Anspruch 5, dadurch gekennzeichnet, daß das positive Drehmoment (Tp) erzeugt wird, wenn die folgenden Merkmale der Vorrichtung (10) richtig eingestellt sind:
Widerstand (R) der mit den Ankerleitern (26) verbundenen Last (52);
Kapazität (C) der Last (52);
Länge (L1) von dem ersten Abschnitt (48) der Statorfläche (24) zu dem zweiten Abschnitt (25) der Statorfläche (24), zwischen der der magnetische Fluß (F) mit Ausnahme von magnetischem Streufluß nicht durch die Rotorfläche (28) hindurch in den magnetischen Flußweg (14) im Stator hinein oder aus ihm heraus verläuft;
Gestalt (S) der Rotorfläche (28); und
Länge (L2) der Rotorfläche (28).

7. Elektromagnetische Vorrichtung nach Anspruch 3, dadurch gekennzeichnet, daß eine Lorentzkraft, die gleich B.l.i. ist, nicht mehr als ein vernachlässigbares negatives Drehmoment (Tn) an einer Eingangs/Ausgangswelle (42) erzeugt, die entweder mit der sich bewegenden Rotoreinrichtung (22) oder der sich bewegenden Statoreinrichtung (12) verbunden ist,
wobei:
"B" der magnetische Fluß durch den Rotor/Stator-Luftspalt (32) ist;
"l" eine Länge dieses Abschnitts des Ankerleiters (26) ist, der sich über die Statorfläche (24) und durch den Rotor/ Stator-Luftspalt (32) erstreckt; und
"i" der elektrische Ankerstrom (Ia) ist.

8. Elektromagnetische Vorrichtung nach Anspruch 7, dadurch gekennzeichnet, daß die Vorrichtung derart betrieben werden kann, daß zwischen dem Zeitpunkt Null und dem kritischen Zeitpunkt der elektrische Ankerstrom (Ia) einen magnetischen Fluß (F) in dem magnetischen Flußweg (14) im Stator erzeugt, der zu einem positiven Drehmoment (Tp) an der Eingangs/Ausgangswelle (42) beiträgt.

9. Elektromagnetische Vorrichtung nach Anspruch 8, dadurch gekennzeichnet, daß das positive Drehmoment (Tp) erzeugt wird, wenn die folgenden Merkmale der Vorrichtung (10) richtig eingestellt sind:
Widerstand (R) einer mit den Ankerleitern (26) verbundenen Last (42);
Kapazität (C) der Last (52);
Länge (L1) von dem ersten Abschnitt (58) der Statorfläche (24) zu dem zweiten Abschnitt (50) der Statorfläche (24), innerhalb derer der magnetische Fluß (F) mit Ausnahme von magnetischem Streufluß nicht durch die Rotorfläche (28) in den magnetischen Flußweg (14) im Stator hinein oder aus ihm heraus verläuft; Gestalt (S) der Rotorfläche (28); und
Länge (L2) der Rotorfläche (28).

10. Elektromagnetische Vorrichtung (210) nach Anspruch 9, dadurch gekennzeichnet, daß die erste und die zweite Rotorfläche (228, 228') in getrennten Ebenen sind, die im wesentlichen parallel zueinander sind; und daß der nicht-kontinuierliche magnetische Flußweg im Stator (214) ein erstes Wegelement (262) aufweist, das sich von dem zweiten Ende (254) der Statorfläche (224) in einer Ebene im wesentlichen parallel zu der Ebene der ersten Rotorfläche (222) zu einem zweiten Wegelement (264) erstreckt, das sich in einer Ebene im wesentlichen senkrecht zu den Ebenen der Rotorflächen (228, 228') erstreckt, wobei sich das zweite Wegelement (264) und ein drittes Wegelement (266) von dem zweiten Wegelement (264) in einer Ebene im wesentlichen parallel zu der Ebene der zweiten Rotorfläche (228') zu dem ersten Ende der zweiten Statorfläche (224') erstrecken.

11. Elektromagnetische Vorrichtung (310) nach Anspruch 10, dadurch gekennzeichnet, daß sowohl die erste als auch die zweite Rotorfläche (328A, 328A') in Form eines Bogens in ihrer jeweiligen Ebene ausgebildet ist; wobei sich die Rotoreinrichtung (322A) um die Eingangs/Ausgangswelle (342) in einem kreisförmigen Weg (330) dreht; und wobei sowohl die erste als auch die zweite Statorfläche (324A; 324A') in Form eines Bogens entlang zumindest eines Teils des kreisförmigen Weges (330) der Rotoreinrichtung (322A) ausgebildet ist.

12. Elektromagnetische Vorrichtung (310A) nach Anspruch 11, dadurch gekennzeichnet, daß die Vorrichtung (310A) zumindest eine weitere ähnliche elektromagnetische Vorrichtung (310B) aufweist, wobei die Rotoreinrichtung (322A, 322B) jeder der Vorrichtungen (310A, 310B) von der Rotoreinrichtung (322B, 322A) jeder anderen Vorrichtung (310B, 310A) magnetisch isoliert ist; daß die Rotoreinrichtung (322A, 322B) jeder der Vorrichtungen (310A, 310B) mit einer gemeinsamen Eingangs/Ausgangswelle (342) in einer ausgewogenen Anordnung verbunden ist und sich um die Welle (342) in einem gemeinsamen kreisförmigen Weg (330) derart dreht, daß die Rotoreinrichtung (322A, 322B) jeder Vorrichtung (310A, 310B) zwischen den Statorflächen (324, 324A', 324B, 324B') jeder der anderen Vorrichtungen (310B, 310A) hindurchtritt.

13. Elektromagnetische Vorrichtung (410) nach Anspruch 9, dadurch gekennzeichnet, daß die erste und die zweite Rotorfläche (428, 428') gekrümmte Oberflächen haben, die in derselben zylindrischen Ebene liegen und in einer ersten Richtung (FD) parallel zu der axialen Richtung der zylindrischen Ebene beabstandet sind; und daß der nicht-kontinuierliche magnetische Flußweg im Stator ein erstes Wegelement (462) aufweist, das sich von dem zweiten Ende (454) der Statorfläche (424) in einer Ebene im wesentlichen senkrecht zu der Oberfläche der ersten Rotorfläche (428) zu einem zweiten Wegelement (464) erstreckt, das sich in einer Richtung im wesentlichen parallel zu der ersten Richtung (FD) erstreckt, in welcher die Rotorflächen (428, 428') beabstandet sind, wobei sich das zweite Wegelement (464) und ein drittes Wegelement (466) von dem zweiten Wegelement (464) in einer Ebene im wesentlichen senkrecht zu der Ebene der zweiten Rotorfläche (424') zu dem ersten Ende (456) der zweiten Statorfläche (458) erstrecken.

14. Elektromagnetische Vorrichtung (410) nach Anspruch 13, dadurch gekennzeichnet, daß die Rotoreinrichtung (422) sich relativ zu der Statoreinrichtung (412) um die Eingangs/Ausgangswelle (442) in einem kreisförmigen Weg (430) bewegt; daß sowohl die erste als auch die zweite Rotorfläche (428, 428') im wesentlichen in derselben Entfernung von der Eingangs/Ausgangswelle (442) positioniert sind; und daß die Länge jeder Rotorfläche in der Richtung des kreisförmigen Weges (430) weniger als 360° ist.

15. Elektromagnetische Vorrichtung (410) nach Anspruch 14, dadurch gekennzeichnet, daß die Rotoreinrichtung (422) mit der Eingangs/Ausgangswelle (442) verbunden ist und sich mit ihr dreht und näher an der Eingangs/Ausgangswelle (442) als die Statoreinrichtung (412) positioniert ist.

16. Elektromagnetische Vorrichtung (510A) nach Anspruch 9, dadurch gekennzeichnet, daß die Vorrichtung (510A) zumindest eine weitere ähnliche elektromagnetische Vorrichtung (510B) aufweist, bei der die Rotoreinrichtung (522, 522B) jeder der Vorrichtungen (510A, 510B) von der Rotoreinrichtung (522B, 522) jeder anderen Vorrichtung (510B, 510A) magnetisch isoliert ist; daß die Statoreinrichtung (512A, 512B) jeder der Vorrichtungen (510A, 510B) mit einer gemeinsamen Eingangs/Ausgangswelle (542) in einer ausgewogenen Anordnung verbunden ist und sich um die Welle (542) in einem gemeinsamen kreisförmigen Weg dreht, so daß die erste und die zweite Rotorfläche (520A, 520B) der Rotoreinrichtung (522, 522B) jeder Vorrichtung (510A, 510B) an den entsprechenden Statorflächen (524A, 524B) der Statoreinrichtung (512A, 512B) jeder der anderen Vorrichtungen (510B, 510A) vorbeilaufen.

17. Elektromagnetische Vorrichtung nach Anspruch 14, dadurch gekennzeichnet, daß jede der Statorflächen (24) eine Länge in der Richtung des kreisförmigen Weges hat, die weniger als 360° und mehr als etwa 240° ist.

18. Elektromagnetische Vorrichtung nach Anspruch 17, dadurch gekennzeichnet, daß die Rotoreinrichtung (22) mit der Eingangs/Ausgangswelle (42) verbunden ist und sich mit ihr dreht und näher an der Eingangs/Ausgangswelle (42) als die Statoreinrichtung (12) positioniert ist.

19. Elektromagnetische Vorrichtung nach Anspruch 14, dadurch gekennzeichnet, daß die Statoreinrichtung (12) mit der Eingangs/Ausgangswelle (42) verbunden ist und sich mit ihr dreht und näher an der Eingangs/Ausgangswelle (42) als die Rotoreinrichtung (22) positioniert ist.

20. Elektromagnetische Vorrichtung nach Anspruch 17, dadurch gekennzeichnet, daß die Statoreinrichtung (12) mit der Eingangs/Ausgangswelle (42) verbunden ist und sich mit ihr dreht und näher an der Eingangs/Ausgangswelle (42) als die Rotoreinrichtung (22) positioniert ist.

## Revendications

1. Un dispositif électro-mécanique asymétrique (10), comprenant :
a) un moyen formant stator géométriquement et magnétiquement asymétrique (12) comprenant :
un chemin de flux magnétique non-continu de stator (14), s'étendant depuis une première partie de stator (16) jusqu'à une seconde partie de stator (18) ;
un entrefer (20) de stator s'étendant de la seconde partie de stator (18) à la première partie du stator (16) ; et
une face de stator (24) possédant une pluralité de conducteurs (26) d'armature s'étendant substantiellement transversalement en travers de la face du stator ;
b) un moyen formant rotor (22), possédant une face (28) de rotor et se déplaçant suivant une trajectoire de mouvement de rotor (30) ;
c) un entrefer (32) de rotor/stator, entre la face (28) du rotor et la face (24) du stator lorsque la face (28) du rotor et la face (24) du stator sont adjacentes l'une à l'autre ;
d) un chemin de flux magnétique continu (34), s'étendant au moins sur une partie du chemin de flux magnétique du stator (14), à travers la face (24) du stator, à travers l'entrefer (32) de rotor/stator, dans, ou en dehors de, la face (28) de rotor, à travers le moyen formant rotor (22), et à travers au moins un moyen (36) de connexion de flux magnétique qui permet au chemin de flux magnétique d'être continu ;
e) Un moyen (46) de génération d'un flux magnétique (F) pour passer à travers le chemin de flux magnétique continu (34) ;
f) dans lequel le moyen formant rotor (22) est capable d'effectuer un mouvement cyclique par rapport au moyen formant stator (12) dans un sens le long de la trajectoire de mouvement de rotor (30) qui se trouve au-dehors du chemin de flux magnétique (14) ;
g) dans lequel, lorsque la face (28) du rotor et la face (24) du stator se déplacent l'une par rapport à l'autre et de manière adjacente, une tension électrique d'armature (Va) et un courant d'armature (Ia) ayant des sens sont développés dans la pluralité des conducteurs (26) d'armature ; dans lequel
(i) une première partie de la trajectoire de mouvement de rotor (30) est adjacente au chemin de flux magnétique de stator (14), et caractérisé en ce qu'une seconde partie de la trajectoire de mouvement de rotor (30) n'est pas adjacente au chemin de flux magnétique de stator de telle sorte que ce flux magnétique (F), à l'exception des fuites de flux magnétique, ne puisse pas passer à travers la face (28) du rotor vers, ou depuis le chemin de flux magnétique de stator (14) ;
(ii) commençant à l'instant zéro jusqu'à l'instant critique, la face (28) du rotor s'éloigne à la fois d'une première partie (48) de la face (24) du stator, et du chemin (14) de flux magnétique de stator, de telle sorte que ce flux magnétique (F), à l'exception des fuites de flux magnétique, ne passe pas à travers la face (28) du rotor vers, ou depuis le chemin de flux magnétique (14) de stator, puis se déplace vers une seconde partie (18) de la face du stator (24), et ensuite de manière telle que la face (28) du rotor soit adjacente à, et en recouvrement de, la face (24) du stator, de telle sorte que le flux magnétique opérationnel (F) passe au travers de la face (28) du rotor vers, ou depuis le chemin de flux magnétique (14) ;
(iii) à l'instant critique, la face (28) du rotor se déplace vers une position de recouvrement maximal de la face (24) du stator ; et
(iv) à partir de l'instant critique jusqu'à la fin du cycle, la face (28) du rotor se déplace le long d'au moins une partie de la face (24) du stator et de manière adjacente à la face (24) du stator dans un sens du chemin (14) de flux magnétique de stator ; et
h) dans lequel lorsque la pluralité des conducteurs de l'armature est fermée ou sous charge, le sens du courant de l'armature (Ia) s'inverse à l'instant critique lorsque la face (28) du rotor se déplace vers une position de recouvrement maximale de la face (24) du stator, sans inversion de sens du flux magnétique (F) et sans inversion de sens du moyen formant rotor (22).

2. Un dispositif électromagnétique selon la revendication 1, caractérisé en ce que :
le moyen formant stator (12) est un corps de forme toroïdale possédant une première extrémité et une seconde extrémité, et s'étendant de façon toroïdale sur moins de 360° depuis la première extrémité jusqu'à la seconde extrémité ;
la première et la seconde extrémités du corps de forme toroïdale sont respectivement les première et seconde parties (16,18) du stator, et l'entrefer (20) du stator est un espace entre la seconde et la première extrémité du corps de forme toroïdale ;
les conducteurs de la pluralité (26) de conducteurs d'armature sont enroulés autour du corps de forme toroïdale ;
le moyen formant rotor (22) est connecté par un premier moyen de connexion (40) de chemin magnétique à un arbre (42) situé concentriquement à l'intérieur du moyen formant stator de forme toroïdale ; et
pendant une durée allant de l'instant zéro jusqu'à l'instant critique, la face (28) du rotor traverse l'entrefer (20) du stator de manière telle que le flux magnétique (F), à l'exception des fuites de flux magnétique, ne puisse pas passer au travers de la face (28) du rotor vers, ou depuis, le chemin de flux magnétique (14) du stator.

3. Un dispositif électromagnétique selon la revendication 1, caractérisé en ce que :
lorsque la face (28) du rotor et la face (24) du stator sont adjacentes l'une à l'autre et l'une recouvrant l'autre, le moyen formant rotor (222) est positionné entre la face (224) du stator et une seconde face (224') du stator qui est espacée par rapport à la première face (224) du stator de manière telle que la seconde face (228') du moyen formant rotor (222) soit adjacente à, et recouvre, la seconde face (224') du stator ;
la face (224) du stator possède une première extrémité (252) et une seconde extrémité (254) ;
la seconde face (224') du stator possède une première extrémité (256) et une seconde extrémité (258) ; et
le chemin (214) de flux magnétique non-continu de stator s'étend depuis la première extrémité (252) de la face (224) du stator, jusqu'à la seconde extrémité (254) de la face (224) du stator, à travers un organe (260) de chemin de stator s'étendant depuis la seconde extrémité (254) de la face (224) du stator jusqu'à la première extrémité (256) de la seconde face (224') du stator, et ensuite depuis la première extrémité (256) de la seconde face (224') du stator jusqu'à la seconde extrémité (258) de la seconde face (224') du stator, de manière à ne pas entraver le mouvement relatif entre le moyen formant rotor (222) et le moyen formant stator (212).

4. Un dispositif électromagnétique selon la revendication 2, caractérisé en ce que une force de Lorentz égale à B.l.i ne crée pas plus qu'un couple négatif négligeable sur un arbre (42) d'entrée/sortie, connecté soit au moyen formant rotor mobile (22) soit au moyen formant stator mobile (12),
où :
"B" est le flux magnétique à travers l'entrefer rotor/stator
"l" est une longueur de cette partie du conducteur d'armature passant en travers de la surface du stator et à travers l'entrefer rotor/stator ; et
"i" est le courant électrique d'armature.

5. Un dispositif électromagnétique selon la revendication 4, caractérisé en ce que le dispositif est utilisable de manière telle qu'entre l'instant zéro et l'instant critique le courant électrique (Ia) d'armature crée un flux magnétique dans le chemin (14) de flux magnétique de stator, contribuant à un couple positif (Tp) sur l'arbre (42) d'entrée/sortie.

6. Un dispositif électromagnétique selon la revendication 5, caractérisé en ce que le couple positif (Tp) est crée lorsque les caractéristiques suivantes du dispositif (10) sont correctement ajustées :
résistance (R) d'une charge (52) connectée aux conducteurs de l'armature (26) ;
capacité (C) de la charge (52) ;
longueur (L1) depuis la première partie (48) de la face (24) du stator jusqu'à la seconde partie (50) de la face (24) du stator pendant laquelle le flux magnétique (F), à l'exception des fuites de flux magnétique, ne passe pas au travers de la face (28) du rotor vers, ou depuis, le chemin de flux magnétique (14) de stator ;
forme (S) de la face (28) du rotor ; et
Longueur (L2) de la face (28) du rotor.

7. Un dispositif électromagnétique selon la revendication 3, caractérisé en ce qu'une force de Lorentz égale à B.l.i ne crée pas plus qu'un couple négatif négligeable (Tn) sur un arbre d'entrée/sortie (42) connecté soit au moyen formant rotor mobile (22) soit au moyen formant stator mobile (12),
où :
"B" est le flux magnétique à travers l'entrefer (32) rotor/stator ;
"l" est une longueur de cette partie (26) du conducteur d'armature passant en travers de la face (24) du stator et à travers l'entrefer (32) rotor/stator
"i" est le courant électrique d'armature (Ia).

8. Un dispositif électromagnétique selon la revendication 7, caractérisé en ce que le dispositif est utilisable de façon telle qu'entre l'instant zéro et l'instant critique le courant (Ia) d'armature crée un flux magnétique (F) dans le chemin (14) de flux magnétique de stator, contribuant à un couple positif (Tp) sur l'arbre (42) d'entrée/sortie.

9. Un dispositif électromagnétique selon la revendication 8, caractérisé en ce que le couple positif (Tp) est crée lorsque les caractéristiques suivantes du dispositif (10) sont ajustées correctement :
résistance (R) d'une charge (52) connectée aux conducteurs de l'armature (26) ;
capacité (C) de la charge (52) ;
longueur (L1) depuis la première partie (48) de la face (24) du stator jusqu'à la seconde partie (50) de la face (24) du stator pendant laquelle le flux magnétique (F), à l'exception des fuites de flux magnétique, ne passa pas au travers de la face (28) du rotor vers, ou depuis, le chemin de flux magnétique (14) de stator ;
forme (S) de la face (28) du rotor ; et
longueur (L2) de la face (28) du rotor.

10. Un dispositif électromagnétique (210) selon la revendication 9, caractérisé en ce que les première et seconde faces (228, 228') du rotor sont situées dans des plans séparés qui sont substantiellement parallèles l'un à l'autre ; et le chemin (214) non-continu de flux magnétique de stator comprend un premier organe (262) de chemin s'étendant depuis la seconde extrémité (254) de la face (224) du stator dans un plan substantiellement parallèle au plan de la première face (222) du rotor jusqu'à un second organe (264) de chemin s'étendant dans un plan substantiellement perpendiculaire aux plans des faces (228, 228') du rotor, le second organe (264) de chemin, et un troisième organe (266) de chemin s'étendant depuis le second organe (264) de chemin dans un plan substantiellement parallèle au plan de la seconde face (228') du rotor jusqu'à la première extrémité (256) de la seconde face (224') du stator.

11. Un dispositif électromagnétique (310) selon la revendication 10, caractérisé en ce que chacune des première et seconde faces (328A, 328A') du rotor est configurée en forme d'arc dans son plan respectif ; le moyen formant rotor (322A) tourne autour de l'arbre (342) d'entrée/sortie selon une trajectoire circulaire (330) ; et chacune des première et seconde faces (324A, 324A') du stator est configurée en forme d'arc suivant au moins une partie de la trajectoire circulaire (330) du moyen formant rotor (322A).

12. Un dispositif électromagnétique (310A) selon la revendication 11, caractérisé en ce que ce dispositif (310A) comprend au moins un autre dispositif électromagnétique (310B) similaire, dans lequel le moyen formant rotor (322A, 322B) de chacun des dispositifs (310A, 310B) est magnétiquement isolé du moyen formant rotor (322B, 322A) de chaque autre dispositif (310B, 310A) ; le moyen formant rotor (322A, 322B) de chacun des dispositifs (310A, 310B) est connecté à un arbre commun (342) d'entrée/sortie dans une configuration équilibrée et tourne autour de l'arbre (342) selon une trajectoire circulaire (330) commune, de telle sorte que le moyen formant rotor (322A, 322B) de chaque dispositif (310A, 310B) passe entre les faces (324, 324A', 324B, 324B') de stator de chacun des autres dispositifs (310B, 310A).

13. Un dispositif électromagnétique (410) selon la revendication 9, caractérisé en ce que les premières et secondes faces (428, 428') du rotor possèdent des surfaces courbes qui se situent dans le même plan cylindrique et sont écartées l'une de l'autre dans une première direction (FD) parallèle à la direction axiale du plan cylindrique ; et le chemin de flux magnétique non-continu du stator comprend un premier organe (462) de chemin s'étendant depuis la seconde extrémité (454) de la face (424) du stator dans un plan substantiellement perpendiculaire à la surface de la première face (428) du rotor jusqu'à un second organe (464) de chemin s'étendant dans une direction substantiellement parallèle à la première direction (FD) dans laquelle les faces (428, 428') du rotor sont écartées l'une de l'autre, le second organe (464) de chemin, et un troisième organe (466) de chemin s'étendant depuis le second organe (464) de chemin dans un plan substantiellement perpendiculaire au plan de la seconde face (424') de rotor jusqu'à la première extrémité (456) de la seconde face (458) du stator.

14. Un dispositif électromagnétique (410) selon la revendication 13, caractérisé en ce que le moyen formant rotor (422) se déplace par rapport au moyen formant stator (412) autour de l'arbre (442) d'entrée/sortie selon une trajectoire (430) circulaire ; chacune des première et seconde faces (428, 428') du rotor est positionnée substantiellement à la même distance par rapport à l'arbre (442) d'entrée/sortie ; et la longueur de chaque face de rotor dans la direction de la trajectoire circulaire (430) est inférieure à 360°.

15. Un dispositif électromagnétique (410) selon la revendication 14, caractérisé en ce que le moyen formant rotor (422) est connecté à, et tourne avec, l'arbre (442) d'entrée/sortie et est positionné plus près de l'arbre (442) d'entrée/sortie que ne l'est le moyen formant stator (412).

16. Un dispositif électromagnétique (510A) selon la revendication 9, caractérisé en ce que le dispositif (510A) comprend au moins un autre dispositif électromagnétique (510B) similaire, dans lequel le moyen formant rotor (522, 522B) de chacun des dispositifs (510A, 510B) est magnétiquement isolé du moyen formant rotor (522B, 522) de chaque autre dispositif (510B, 510A) ; le moyen formant stator (512A, 512B) de chacun des dispositifs (510A, 510B) est connecté à un arbre (542) commun d'entrée/sortie dans une configuration équilibrée et tourne autour de l'arbre (542) selon une trajectoire circulaire commune, de telle sorte que les première et seconde faces de rotor (520A, 520B) du moyen formant rotor (522, 522B) de chaque dispositif (510A, 510B) traverse les faces correspondantes (524A, 524B) du moyen formant stator (512A, 512B) de chacun des autres dispositifs (510B, 510A).

17. Un dispositif électromagnétique selon la revendication 14, caractérisé en ce que chacune des faces (24) de stator possède une longueur dans la direction de la trajectoire circulaire qui est inférieure à 360° et supérieure à 240°.

18. Un dispositif électromagnétique selon la revendication 17, caractérisé en ce que le moyen formant rotor (22) est connecté à, et tourne avec, un arbre (42) d'entrée/sortie et est positionné plus près de l'arbre (42) d'entrée/sortie que ne l'est le moyen formant stator (12).

19. Un dispositif électromagnétique selon la revendication 14, caractérisé en ce que le moyen formant stator (12) est connecté à, et tourne avec, l'arbre (42) d'entrée/sortie et est positionné plus près de l'arbre (42) d'entrée/sortie que ne l'est le moyen formant rotor (22).

20. Un dispositif électromagnétique selon la revendication 17, caractérisé en ce que le moyen formant stator (12) est connecté à, et tourne avec, l'arbre (42) d'entrée/sortie et est positionné plus près de l'arbre (42) d'entrée/sortie que ne l'est le moyen formant rotor (22).
